# EUROPEAN PATENT APPLICATION

(11) **EP 3 091 801 A1**
(43) Date of publication of application: **09.11.2016**
(21) Application number: 14801058.0
(22) Date of filing: 04.06.2014
(51) Int. Cl.: H04W 72/04

(54) **METHOD AND DEVICE FOR ALLOCATING RESOURCE BLOCK, AND STORAGE MEDIUM**

(30) Priority: 31.12.2013 CN 201310753139
(71) Applicant: ZTE Corporation, Shenzhen, Guangdong 518057 (CN)
(72) Inventor: FENG, Bo, Shenzhen Guangdong 518057 (CN)
(74) Representative: Regimbeau
(86) International application number: PCT/CN2014/079196
(87) International publication number: WO 2014/187391

(57) **Abstract**

The present disclosure provides a method and device for allocating resource block, and a storage medium. The method includes: randomly determining a resource block starting position allocated for a cell; and allocating resource blocks for user equipments in the cell from the starting position.

## Description

### Technical Field

The present disclosure relates to a field of mobile communications, and particularly to a method and device for allocating resource block and a storage medium applicable to a long term evolution system.

### Background

An LTE (Long Term Evolution) project is an evolution of 3G, improves and enhances an air access technology of 3G, and adopts an OFDM (Orthogonal Frequency Division Multiplexing) technology and an MIMO (Multiple-Input Multiple-Output) technology as unique standards of evolution of a wireless network. Under a spectral bandwidth of 20 MHz, the LTE project can provide a downlink peak rate of 100 Mbit/s and an uplink peak rate of 50 Mbit/s, thereby improving performance of users at edges of cells, enhancing cell capacity and reducing system delay. The LTE is also commonly called as 3.9G, which has a data download capability of 100 Mbps and is considered as a mainstream technology of evolution from 3G to 4G.

RB (Resource Block) is a scheduling unit of service resources in the LTE. RB position allocation is an essential link in a system. Generally, when RB position allocation is conducted in cells, positions of starting resource blocks allocated for each cell are identical. For example, resource blocks are generally allocated to user equipments of a cell one by one from a most low frequency to a high frequency. Such an allocation mode has a disadvantage that: there would be a mutual interference problem due to identical frequency bands of starting resource blocks of various cells since resource block starting positions allocated for various cells are identical. Moreover, regardless of loads of cells, the interference always exists and hinders improvement of system performance.

### Summary

In view of this, embodiments of the present disclosure provide a method and device for allocating resource block, and a storage medium, so as to solve a problem in an existing technology that there always be interference between resources used in resource block starting positions among cells.

To solve the above technical problem, in a first aspect, embodiments of the present disclosure provide a method for allocating resource block, including:
randomly determining a resource block starting position allocated for a cell; and
allocating resource blocks for user equipments in the cell from the starting position.

Preferably, allocating resource blocks for user equipments in the cell from the starting position, includes: allocating, from the starting position according to a sequence of resource blocks from low frequency to high frequency, idle resource blocks for all user equipments to be scheduled in the cell.

Preferably, randomly determining a resource block starting position allocated for a cell, includes:
calculating a difference value between a system bandwidth resource block total number and a total number of resource blocks required by all user equipments in the cell; and
randomly selecting an integer from digits greater than zero and less than or equal to the difference value, and determining the resource block starting position allocated for the cell according to the integer.

Preferably, randomly determining a resource block starting position allocated for a cell, includes: randomly selecting an integer directly from digits greater than zero and less than or equal to the system bandwidth resource block total number, and determining the resource block starting position allocated for the cell according to the integer.

Preferably, randomly determining a resource block starting position allocated for a cell, includes: randomly generating one starting position as the resource block starting position allocated for the cell according to pre-stored fixed resource block positions.

In a second aspect, embodiments of the present disclosure further provide a device for allocating resource block, including: a starting position determining module and an allocating module, where
the starting position determining module is configured to randomly determine a resource block starting position allocated for a cell; and
the allocating module is configured to allocate resource blocks for user equipments in the cell from the starting position.

Preferably, the allocating module is configured to allocate, from the starting position according to a sequence of resource blocks from low frequency to high frequency, idle resource blocks for all user equipments to be scheduled in the cell.

Preferably, the starting position determining module includes a calculating unit, a first selecting unit and a first determining unit, where:
the calculating unit is configured to calculate a difference value between a system bandwidth resource block total number and a total number of resource blocks required by all user equipments in the cell;
the first selecting unit is configured to randomly select an integer from digits greater than zero and less than or equal to the difference value; and
the first determining unit is configured to determine the resource block starting position allocated for the cell according to the integer.

Preferably, the starting position determining module includes a second selecting unit and a second determining unit, where:
the second selecting unit is configured to randomly select an integer directly from digits greater than zero and less than or equal to the system bandwidth resource block total number; and
the second determining unit is configured to determine the resource block starting position allocated for the cell according to the integer.

Preferably, the starting position determining module includes: a fixed position determining unit and a third determining unit, where:
the fixed position determining unit is configured to predetermine at least two fixed resource block positions in the system bandwidth; and
the third determining unit is configured to randomly generate one starting position as the resource block starting position allocated for the cell according to pre-stored fixed resource block positions.

In a third aspect, embodiments of the present disclosure further provide a computer readable storage medium, in which a computer-executable instruction is stored, and the computer-executable instruction is used for executing the above method for allocating resource block.

Embodiments of the present disclosure have following beneficial effects.

In the method and the device for allocating resource block and the storage medium provided in embodiments of the present disclosure, a resource block starting position allocated for a cell is randomly determined first; and then resource blocks for user equipments in the cell are allocated from the starting position, thereby solving a problem in an existing technology that there always be interference between resources used in resource block starting positions among cells.

In the method and the device for allocating resource block and the storage medium provided in embodiments of the present disclosure, starting positions of resource block positions of various cells would not be entirely identical, and may be entirely different since resource block starting positions allocated for cells are randomly selected. Therefore, frequency bands used by starting resource blocks of various cells would not be entirely identical, thereby reducing odds of mutual interference between resources used in the resource block starting positions among cells and improving performance of a system.

There would be great odds that resource block starting positions randomly generated in various cells in a whole network are different, especially when a cell has light load and number of resource blocks required by user equipments to be scheduled in a cell is relatively small. In this way, resources of different frequency bands are occupied by all the cells and interference among the cells is coordinated.

### Description of the Drawings

Figure 1 is a flow diagram showing a method for allocating resource block in embodiment 1 of the present disclosure.
Figure 2 is a flow diagram showing a method for allocating resource block in embodiment 2 of the present disclosure.
Figure 3 is a flow diagram showing a method for allocating resource block in embodiment 3 of the present disclosure.
Figure 4 is a flow diagram showing a method for allocating resource block in embodiment 4 of the present disclosure.
Figure 5-1 is a composition structure diagram showing a device for allocating resource block in embodiment 5 of the present disclosure.
Figure 5-2 is a composition structure diagram 1 showing a starting position determining module in embodiment 5 of the present disclosure.
Figure 5-3 is a composition structure diagram 2 showing a starting position determining module in embodiment 5 of the present disclosure.
Figure 5-4 is a composition structure diagram 3 showing a starting position determining module in embodiment 5 of the present disclosure.

### Detailed Description

The present disclosure is further detailed below through specific embodiments in combination with drawings.

### Embodiment 1

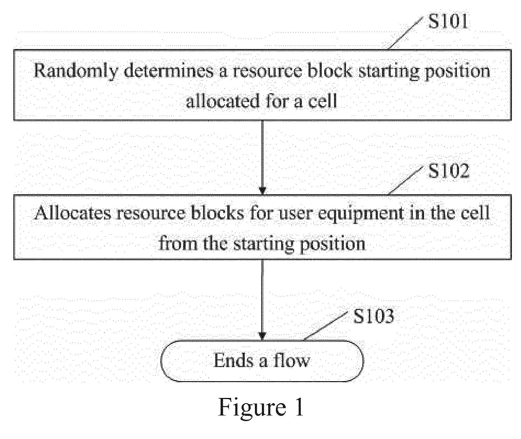

The present embodiment provides a method for allocating resource block referring to Figure 1. Figure 1 is a flow diagram showing the method provided in the present embodiment, and specifically includes following steps S101 to S103.

In S101, randomly determines a resource block starting position allocated for a cell.

In the present embodiment, a resource block in the starting position is called as a starting resource block.

In the present embodiment, a system would randomly allocate one resource block starting position for each cell, rather than randomly determine one starting position of the resource block as the resource block starting position of each cell.

In the present embodiment, a following method may be adopted for randomly determining a resource block starting position allocated for a cell.
(1) numbers or labels resource blocks in the system according to a sequence from low frequency band to high frequency band for randomly generating an integer; and regards a resource block numbered or labeled with the integer as a starting resource block allocated for a cell.
(2) Calculates a difference value between a system bandwidth resource block total number and a total number of resource blocks required by all user equipments in the cell; randomly selects an integer from digits greater than or equal to zero and less than or equal to the difference value, and determines the resource block starting position allocated for the cell according to the integer. After obtaining the randomly selected integer, the starting resource block allocated for the cell may be determined through a correlation between the integer and resource blocks in the system bandwidth; and the resource block starting position allocated for the cell may be determined by further performing certain algorithms on the integer.
   In the present embodiment, the system bandwidth resource block total number refers to a total number of resource blocks possessed by the system bandwidth. To better describe the system bandwidth resource block total number, descriptions are made with an example that: the system bandwidth is 20 MHZ; each resource block occupies a bandwidth of 200 KHZ; and then the system bandwidth has a total number of resource blocks of 20 MHZ/200 KHZ=100.
(3) In system bandwidth resource blocks, determines and stores a plurality of fixed resource block positions; and during resource block allocation, randomly generates one resource block starting position as the resource block starting position allocated for the cell according to pre-stored fixed resource block positions. There are many random generation modes, and a simplest mode is to randomly select one position from the plurality of fixed resource block positions.
(4) Randomly selects an integer directly from digits greater than or equal to zero and less than or equal to the system bandwidth resource block total number, and obtains the starting position in system bandwidth resource blocks in the cell according to the integer. After obtaining the randomly selected integer, the starting resource block allocated for the cell may be determined through a correlation between the integer and resource blocks in the system bandwidth; and the resource block starting position allocated for the cell may be determined by further performing certain algorithms on the integer.

In S102, allocates resource blocks for user equipment in the cell from the starting position.

Allocating resource blocks for user equipment in the cell from the starting position, includes: allocating, from the starting position according to a sequence of resource blocks from low frequency to high frequency, idle resource blocks for all user equipment to be scheduled in the cell.

In S103, ends a flow.

Here, ending a flow means that RB positions are allocated to all users as needed.

In the present embodiment, the system can randomly determine one resource block starting position for the cell within each TTI (Transmission Time Interval), so that each cell has a different resource block starting position within each TTI. When a heterogeneous system has interference leakage on an LTE system at a fixed frequency band, for each cell, an interference leakage frequency band of the heterogeneous system is avoided in different time period so as to enhance robustness of the system since RB bands allocated within various TTI are different.

### Embodiment 2

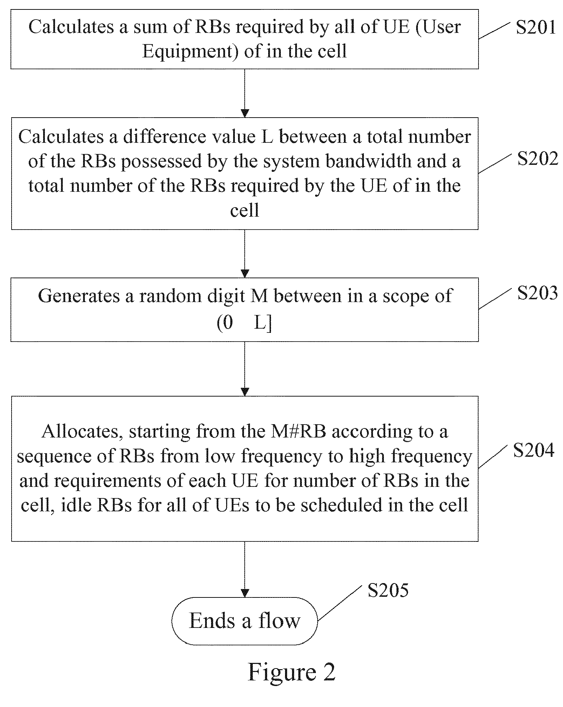

To describe a method for allocating resource block provided in embodiments of the present disclosure in more detail, with reference to Figure 2, the method includes S201 to S205.

In S201, calculates a sum of RBs required by all UE (User Equipment) in the cell.

In S202, calculates a difference value L between a total number of RBs possessed by the system bandwidth and a total number of RBs required by the UE in the cell.

In S203, generates a random digit M in a scope of (0, L],
where generating a random digit M in a scope of (0, L] means randomly generating an integer greater than zero and less than or equal to the L, and defining the integer as the M.

In S204, allocates, starting from the M#RB according to a sequence of RBs from low frequency to high frequency and requirements of each UE for number of RBs in the cell, idle RBs for all UEs to be scheduled in the cell;
the M#RB represents an M^{th} resource block starting from a most low frequency in system bandwidth resource blocks, and starting from the M#RB means that the M#RB is used as a starting resource block allocated for the cell.

In S205, ends a flow.

Here, ending a flow means that RB positions are allocated to all users as needed.

### Embodiment 3

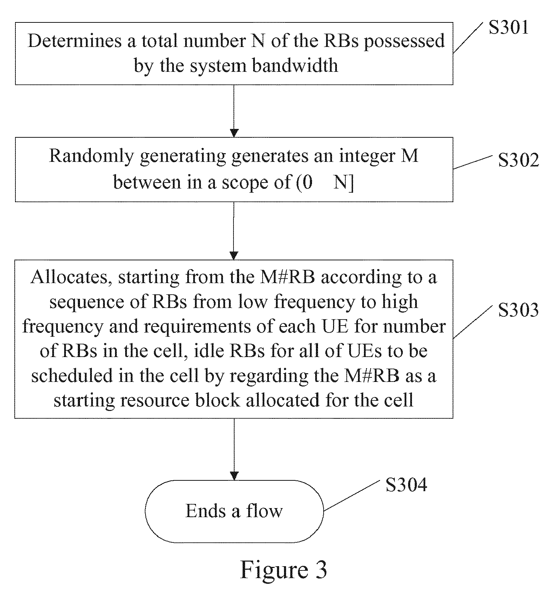

To describe a method for allocating resource block provided in embodiments of the present disclosure in more detail, with reference to Figure 3, the method includes S301 to S304.

In S301, determines a total number N of RBs possessed by the system bandwidth.

In S302, randomly generates an integer M in a scope of (0, N];
here, generating an integer M in a scope of (0, N] means randomly generating an integer greater than zero and less than or equal to the N, and defining the integer as the M.

In S303, allocates, starting from the M#RB according to a sequence of RBs from low frequency to high frequency and requirements of each UE for number of RBs in the cell, idle RBs for all UEs to be scheduled in the cell by regarding the M#RB as a starting resource block allocated for the cell;
the M#RB represents an M^{th} resource block starting from a most low frequency in system bandwidth resource blocks.

In S304, ends a flow.

Here, ending a flow means that RB positions are allocated to all users as needed.

### Embodiment 4

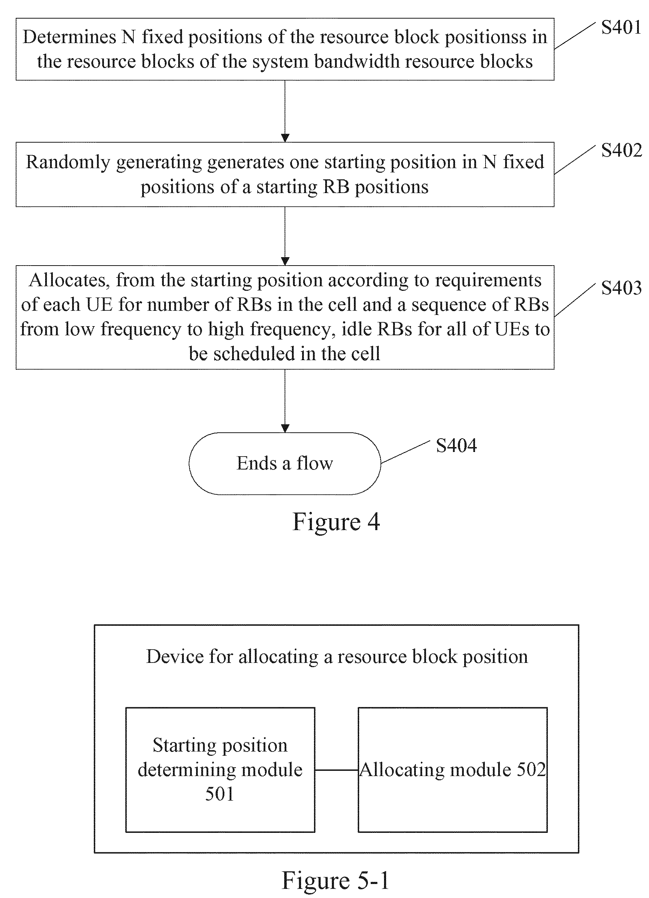

To describe a method for allocating resource block provided in embodiments of the present disclosure in more detail, with reference to Figure 4, the method includes S401 to S404.

In S401, determines N fixed resource block positions in system bandwidth resource blocks;
here, S401 can also include storing the N fixed resource block positions.

In S402, randomly generates one starting position in N fixed starting RB positions;
here, the randomly generated starting position is used as a starting position of RBs allocated for the cell within a current TTI (Transmission Time Interval).

In S403, allocates, from the starting position according to requirements of each UE for number of RBs in the cell and a sequence of RBs from low frequency to high frequency, idle RBs for all UEs to be scheduled in the cell.

In S404, ends a flow.

Here, ending a flow means that resource blocks are allocated to all users as needed.

### Embodiment 5

The present embodiment provides a device for allocating resource block. With reference to Figure 5-1, the device is arranged based on the above method and includes a starting position determining module 501 and an allocating module 502, where
the starting position determining module 501 is configured to randomly determine a resource block starting position allocated for a cell; and
the allocating module 502 is configured to allocate resource blocks for user equipments in the cell from the starting position.

During allocation of resource blocks for the user equipment in the cell in the present embodiment, the allocating module 502 specifically allocates, from the starting position according to a sequence of resource blocks from low frequency to high frequency, idle resource blocks for all user equipments to be scheduled in the cell.

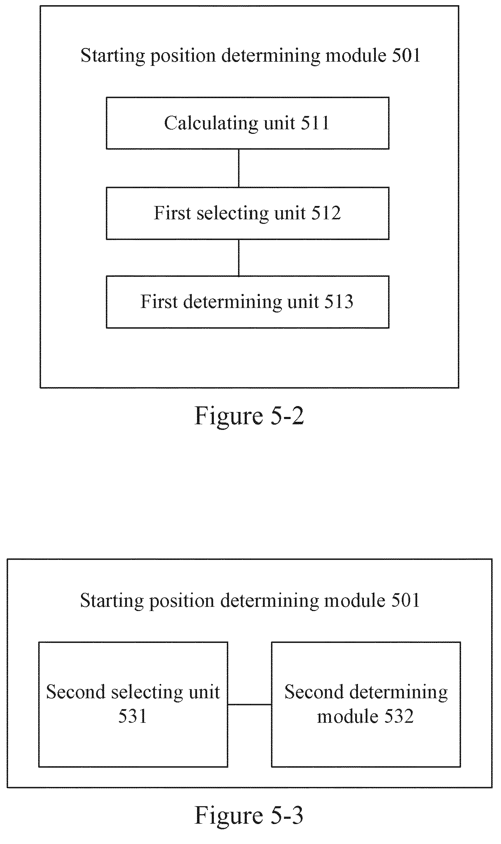

As shown in Figure 5-2, the starting position determining module 501 in the present embodiment may include a calculating unit 511, a first selecting unit 512 and a first determining unit 513, where
the calculating unit 511 is configured to calculate a difference value between a system bandwidth resource block total number and a total number of resource blocks required by all user equipments in the cell;
the first selecting unit 512 is configured to randomly select an integer from digits greater than or equal to zero and less than or equal to the difference value; and
the first determining unit 513 is configured to determine the resource block starting position allocated for the cell according to the integer.

Another embodiment of the present disclosure provides another device for allocating resource block including: a starting position determining module and an allocating module, where a function of the allocating module is as same as that of the allocating module in embodiments shown in Figure 5-1. There is a difference as shown in Figure 5-3 that the starting position determining module 501 in the device includes a second selecting unit 531 and a second determining unit 532.

The second selecting unit 531 is configured to randomly select an integer directly from digits greater than or equal to zero and less than or equal to the system bandwidth resource block total number; and

The second determining unit 532 is configured to determine the resource block starting position allocated for the cell according to the integer.

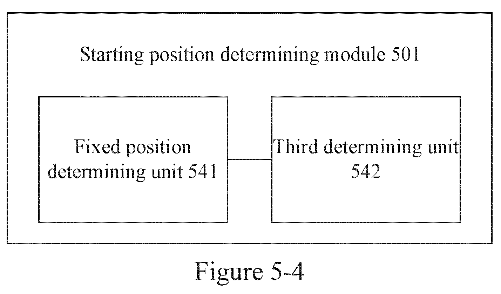

Another embodiment of the present disclosure provides another device for allocating resource block including: a starting position determining module and an allocating module, where a function of the allocating module in the device is as same as that of the allocating module in embodiments shown in above Figure 5-1. There is a difference as shown in Figure 5-4 that the starting position determining module 501 in the device includes a fixed position determining unit 541 and a third determining unit 542.

The fixed position determining unit 541 is configured to predetermine at least two fixed resource block positions in the system bandwidth; and
the third determining unit 542 is configured to randomly generate one starting position as the resource block starting position allocated for the cell according to pre-stored fixed resource block positions.

The starting position determining module and the allocating module in the device for allocating resource block provided in embodiments of the present disclosure as well as each unit in the starting position determining module can be realized through a processor in a base station, and certainly can also be realized through a specific logic circuit. In a process of specific embodiments, the processor may be a central processing unit (CPU), a micro processor unit (MPU), a digital signal processor (DSP) or a field programmable gate array (FPGA), etc.

In embodiments of the present disclosure, if the above method for allocating resource block is realized in a form of a software function module and is sold or used as an independent product, the above method can also be stored in a computer readable storage medium. Based on such understanding, technical solutions in embodiments of the present disclosure can be reflected in a form of a software product in essence or in a part of making a contribution to the existing art. The computer software product is stored in a storage medium, including several instructions to enable one computer device (may be a personal computer, a server or a network device, etc.) to execute all or some of the methods of various embodiments of the present disclosure. However, the foregoing storage medium includes: various media such as a USB flash disk, a mobile hard disk, a read only memory (ROM), a magnetic disc or a compact disc, etc. which can store program coeds. In this way, embodiments of the present disclosure are not limited to any specific hardware and software combination.

Accordingly, embodiments of the present disclosure further provide a computer readable storage medium, in which a computer-executable instruction is stored, and the computer-executable instruction is used for executing the method for allocating resource block provided in various embodiments of the present disclosure.

The above contents are further detailed descriptions of the present disclosure in combination with the specific embodiments. However, it cannot be considered that the specific embodiments of the present disclosure are only limited to these descriptions. For those ordinary skilled in the art to which the present disclosure belongs, several simple deductions or replacements may be made without departing from the conception of the present disclosure, all of which shall be considered to belong to the protection scope of the present disclosure.

### Industrial Applicability

In embodiments of the present disclosure, a resource block starting position allocated for a cell is randomly determined first; and then resource blocks for user equipments in the cell are allocated from the starting position, thereby solving a problem in an existing technology that there always be interference between resources used in resource block starting positions among cells.

## Claims

1. A method for allocating resource block, comprising:
randomly determining a resource block starting position allocated for a cell; and
allocating resource blocks for user equipments in the cell from the starting position.

2. The method of claim 1, wherein allocating resource blocks for user equipments in the cell from the starting position, comprises:
allocating, from the starting position according to a sequence of resource blocks from low frequency to high frequency, idle resource blocks for all user equipments to be scheduled in the cell.

3. The method of claim 1 or 2, wherein randomly determining a resource block starting position allocated for a cell, comprises:
calculating a difference value between a system bandwidth resource block total number and a total number of resource blocks required by all user equipments in the cell; and
randomly selecting an integer from digits greater than zero and less than or equal to the difference value, and determining the resource block starting position allocated for the cell according to the integer.

4. The method of claim 1 or 2, wherein randomly determining a resource block starting position allocated for a cell, comprises:
randomly selecting an integer directly from digits greater than zero and less than or equal to the system bandwidth resource block total number, and determining the resource block starting position allocated for the cell according to the integer.

5. The method of claim 1 or 2, wherein randomly determining a resource block starting position allocated for a cell, comprises:
randomly generating one starting position as the resource block starting position allocated for the cell according to pre-stored fixed resource block positions.

6. A device for allocating resource block, comprising: a starting position determining module and an allocating module, wherein:
the starting position determining module is configured to randomly determine a resource block starting position allocated for a cell; and
the allocating module is configured to allocate resource blocks for user equipments in the cell from the starting position.

7. The device of claim 6, wherein the allocating module is configured to allocate, from the starting position according to a sequence of resource blocks from low frequency to high frequency, idle resource blocks for all user equipments to be scheduled in the cell.

8. The device of claim 6 or 7, wherein the starting position determining module comprises a calculating unit, a first selecting unit and a first determining unit, wherein:
the calculating unit is configured to calculate a difference value between a system bandwidth resource block total number and a total number of resource blocks required by all user equipments in the cell;
the first selecting unit is configured to randomly select an integer from digits greater than zero and less than or equal to the difference value; and
the first determining unit is configured to determine the resource block starting position allocated for the cell according to the integer.

9. The device of claim 6 or 7, wherein the starting position determining module comprises a second selecting unit and a second determining unit, wherein:
the second selecting unit is configured to randomly select an integer directly from digits greater than zero and less than or equal to the system bandwidth resource block total number; and
the second determining unit is configured to determine the resource block starting position allocated for the cell according to the integer.

10. The device of claim 6 or 7, wherein the starting position determining module comprises a fixed position determining unit and a third determining unit, wherein:
the fixed position determining unit is configured to predetermine at least two fixed resource block positions in the system bandwidth; and
the third determining unit is configured to randomly generate one starting position as the resource block starting position allocated for the cell according to pre-stored fixed resource block positions.

11. A computer readable storage medium, in which a computer-executable instruction is stored, and the computer-executable instruction is used for executing the method for allocating resource block in any of claims 1 to 5.
